# EUROPÄISCHE PATENTANMELDUNG

(11) **EP 0 620 333 A1**
(43) Veröffentlichungstag der Anmeldung: **19.10.1994**
(21) Anmeldenummer: 94104077.6
(22) Anmeldetag: 16.03.1994
(51) Int. Cl.: E04C 2/08, F16B 5/06, B61D 17/04, B62D 25/02

(54) **Ebenes, aus Strangpressprofilen gebildetes, doppelwandiges Verbundprofil**

(30) Priorität: 07.04.1993 DE 4311497
(71) Anmelder: Linke-Hofmann-Busch GmbH, D-38239 Salzgitter (DE)
(72) Erfinder: Asche, Günter, D-38268 Lengede (DE); Schönberger, Peter, Dipl.-Ing., D-21029 Hamburg (DE)

(57) **Zusammenfassung**

Die Erfindung betrifft ein ebenes, aus Strangpreßprofilen gebildetes, doppelwandiges Verbundprofil, das aus mindestens zwei Profilen (1) besteht, die einen Ober- und einen Untergurt (2 und 3) aufweisen, welche durch einen Steg (4) auf Abstand gehalten sind und welche Nut- und Federleisten (5 und 6) aufweisen.

Um die Herstellung und das Fügen der das Verbundprofil bildenden Profile (1) zu vereinfachen und um eine Gewichtsreduzierung des Verbundprofils pro Flächeneinheit zu erreichen, sind die ineinandersteckbaren Profile (1) gleich ausgebildet und jedes Profil (1) weist lediglich eine Federleiste (6) und eine Nutleiste (5) auf, die etwa in der Längsmittelebene des Profils (1) im Eckbereich zwischen Obergurt (2) und Steg (4) angeordnet ist. Der Untergurt (3) weist im Eckbereich zwischen Untergurt (3) und Steg (4) einen stufigen Absatz (7) auf, in den das benachbarte Profil (1) eingreift und die Untergurte (3) zweier benachbarter Profile (1) gegeneinander festlegt.

## Beschreibung

Die Erfindung betrifft ein ebenes, aus Strangpreßprofilen gebildetes, doppelwandiges Verbundprofil nach dem Oberbegriff des Schutzanspruchs 1.

Ein aus der gattungsbildenden GM 85 00 388 bekanntes Verbundprofil weist ein erstes Profil mit an den Langskanten des Ober- und des Untergurtes angeordneten Nutleisten und ein benachbartes zweites Profil mit an den Langskanten des Ober- und des Untergurtes angeordneten Stegleisten auf, die in die Nutleisten des ersten Profils eingreifen und mittels Verpressung in Querrichtung formschlüssig miteinander verbunden sind. Jedes Profil weist zwei parallele übereinander angeordnete Gurte (Ober- und Untergurt) auf, die durch mindestens einen Steg miteinander verbunden sind. Das erste Profil ist mit zwei Stegen als Hohlprofil von rechteckigem Querschnitt ausgebildet. An einer Stegseite ist sowohl am Ober- als auch am Untergurt je eine Nutleiste angeformt. Die Nutleisten sind senkrecht übereinander angeordnet. Das zweite Profil ist mit einem Steg als einseitig offenes Hohlprofil von rechteckigem Querschnitt ausgebildet. An der offenen Seite ist sowohl am Ober- als auch am Untergurt je eine Stegleiste angeformt, die in die jeweils zugeordneten Nutleisten des ersten Profils eingreifen und mit diesen verbunden sind. Die Anordnung und Ausbildung der Profile zur Erzeugung eines Verbundprofils mit mehr als zwei Profilen ist nicht angegeben und mit den beispielhaft offenbarten Profilausbildungen nicht möglich. Zur Erzeugung eines Verbundprofils mit mehr als zwei Profilen wäre das erste, geschlossene Hohlprofil geeignet, wenn an der zweiten Stegseite des Profils den Steg überragende Federleisten an den Ober- bzw. Untergurt angeformt sind. Ein derartig weitergebildetes Verbundprofil wiese aber im Bereich der Nut- und Stegleisten zwei Stege auf, die aus Festigkeitsgründen nicht erforderlich sind und zu einem erheblichen Mehrgewicht pro Flächeneinheit führen. Nachteilig ist auch, daß zwei Nut- und Stegleistenbereiche gleichzeitig, nämlich am Ober- und am Untergurt, einzustecken und zu bearbeiten sind.

Der Erfindung liegt daher die Aufgabe zugrunde, ein Verbundprofil der eingangs genannten Art derart weiterzubilden, daß die Herstellung und das Fügen der das Verbundprofil bildenden Profile vereinfacht und eine Gewichtsreduzierung des Verbundprofils pro Flächeneinheit erreicht wird.

Diese Aufgabe wird für ein gattungsgemäßes Verbundprofil durch die im kennzeichnenden Teil des Anspruchs 1 genannten Merkmale gelöst.

Zweckmäßige Ausgestaltungen und Weiterbildungen der Erfindung sind in den Unteransprüchen angegeben.

Durch die Ausbildung des Verbundprofils nach Anspruch 1 wird ein im Verhältnis zur Belastbarkeit günstiges Flächengewicht pro Flächeneinheit erzielt. Die einzelnen Profile des Verbundprofils sind einfach und, insbesondere wegen der Verwendung von gleichen Profilen, wirtschaftlicher herzustellen und zu fügen.

Durch das Verbinden der Untergurte zweier benachbarter Profile mittels eines Schweißverfahrens gemäß Anspruch 2 ist eine hochbelastbare, wirtschaftliche Verbindung von hoher Querzugfestigkeit geschaffen, die auch geeignet ist, Krafteinleitungen in einer Ebene parallel zur Längsrichtung der Profile aufzunehmen.

Durch die Weiterbildung gemäß Anspruch 3 wird die Belastbarkeit des Verbundprofils weiter gesteigert und die Gefahr der Spaltkorrosion vermindert.

Die Ausbildung der Profile gemäß Anspruch 4 führt zu einem hoch belastbaren Profil von großer Steifigkeit für Krafteinleitungen senkrecht auf die Oberfläche des Profils.

Durch die Anordnung der Profile des Verbundprofils gemäß Anspruch 5 ist ein plattenartiges Flächenelement gebildet, daß in einer Krafteinleitungsebene eine besonders hohe Belastbarkeit bei geringer Nachgiebigkeit aufweist.

Durch die Anordnung der Profile des Verbundprofils gemäß Anspruch 6 ist bei Rechteckfeldern die Verwendung von längeren Profilen möglich, was insbesondere eine wirtschaftlichere Herstellung und Montage ermöglicht. Diese Vorteile zeigen sich besonders, wenn Abschluß- oder Kantenprofile an die Kanten des Verbundprofils anzubringen sind.

Ein neuerungsgemäß ausgebildetes Verbundprofil ist vorteilhaft gemäß Anspruch 7 als Flächenelement für ebene Wand-, Boden- oder Dachelemente für Schienenfahrzeuge einsetzbar.

Durch die Verwendung von neuerungsgemäßen Verbundprofilen als Flächenelemente für verschiebbare Seitenwände von gedeckten Eisenbahngüterwagen gemäß Anspruch 8 erreicht man im Gegensatz zu bisher bekannten Seitenwandausbildungen bei Eisenbahngüterwagen eine weitgehend glatte Außenfläche mit günstigen aerodynamischen Eigenschaften mit den Vorteilen eines geringen Schall- und Geräuschpegels sowie eines geringen Fahrtwiderstandes.

Für die Verwendung bei Eisenbanngüterwagen ist zusätzlich die große Stabilität des Verbundprofils bei hohen Belastungen aus der Ladung oder bei Druckstößen (Zugbegegnung und/oder Tunnelfahrt) hervorzuheben.

Da bisher ausgeführte verschiebbare Seitenwandteile für gedeckte Eisenbahngüterwagen bisher keine glatten Außenflächen aufwiesen, sondern z. B. mit außenliegenden Hutprofilen und Wabenblechfeldern ausgeführt wurden, ergeben sich bei Verwendung von Verbundprofilen eine einfachere Anbringung von Aufklebern und Schriftzügen (keine Verzerrung mehr) und eine bessere Reinigungsmöglichkeit.

Ausführungsbeispiele der Erfindung sind in der Zeichnung dargestellt und werden nachfolgend näher beschrieben. Die Zeichnung zeigt dazu in
- Fig. 1: ein Einzelprofil im Querschnitt;
- Fig. 2: ein aus Einzelprofilen zusammengefügtes Verbundprofil im Querschnitt;
- Fig. 3: eine verschiebbare Seitenwand für gedeckte Eisenbahngüterwagen mit Flächenelementen aus Verbundprofilen in Seitenansicht;
- Fig. 4: die Seitenwand nach Fig. 3 im Querschnitt;
- Fig. 5: die Einzelheit W nach der Fig. 4;
- Fig. 6: die Einzelheit X nach der Fig. 4;
- Fig. 7: die Einzelheit Y nach der Fig. 4;
- Fig. 8: einen Schnitt durch die Seitenwand nach der Linie VIII - VIII im Abschnitt des rechten Endbereiches der Seitenwand;
- Fig. 9: ein zweites Ausführungsbeispiel für ein Einzelprofil im Querschnitt.

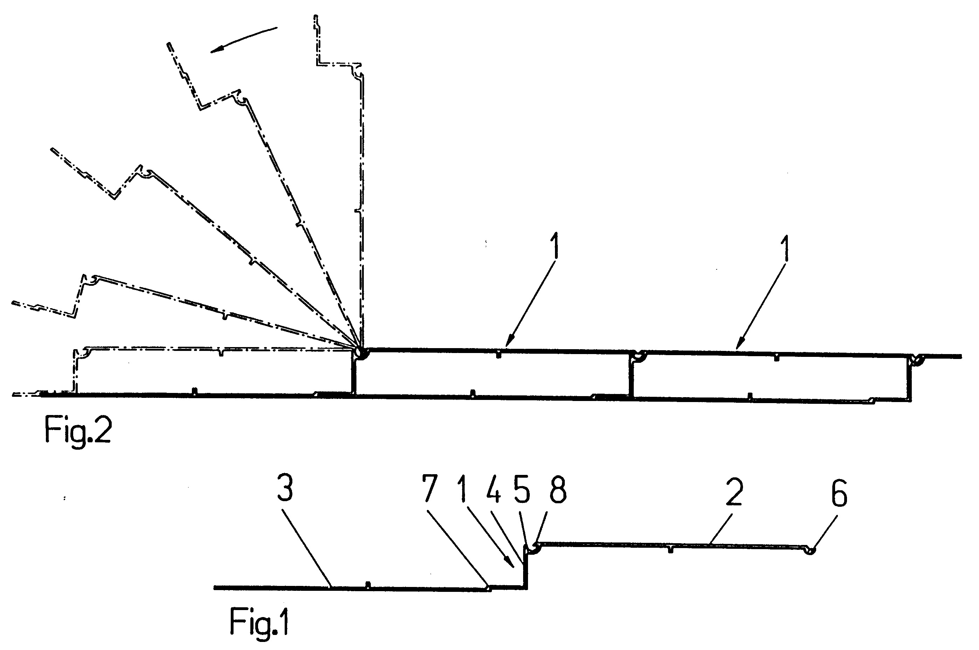

Ein in Fig. 2 dargestelltes Verbundprofil besteht aus mindestens zwei, miteinander verbundenen Stangpreßprofilen (Profilen 1). Die Profile 1 sind gleich ausgebildet und ineinander und steckbar in Querrichtung formschlüssig miteinander verbindbar bzw. verklemmbar.

Das in Fig. 1 dargestellte Profil weist einen Obergurt 2, einen Untergurt 3 und einen den Ober- und Untergurt 2 und 3 auf Abstand verbindenden Steg 4 auf. Der Ober- und Untergurt 2 und 3 sind zueinander parallel ausgerichtet. Der Obergurt 2 des Profils 1 ist an einem Ende des Steges 4 angeordnet und erstreckt sich zu einer Seite des Steges 4. Der Untergurt 3 des Profils 1 ist am anderen Ende des Steges 4 angeordnet und erstreckt sich zur anderen Seite des Steges 4. An der freien Kante des Obergurtes 2 ist eine Federleiste 6 angeformt. Etwa in der Längsmittelebene des Profils 1 im Eckbereich zwischen Obergurt 2 und Steg 4 ist eine Nutleiste 5 angeformt. Der Untergurt 3 des Profils 1 weist im Eckbereich zwischen Untergurt 3 und Steg 4 einen stufigen Absatz 7 in Erstreckung der Wandstärkendicke des Untergurtes 3 in Richtung auf den Obergurt 2 auf.

Am Absatz 7 ist ein benachbartes Profil 1 mit dem Endbereich seines Untergurtes 3 bündig anlegbar, so daß eine nahezu fugenlose ebene Fläche herstellbar ist. Im Eck- bzw. Absatzbereich sind die Untergurte 3 zweier benachbarter Profile 1 gegeneinander festgelegt.

Vorzugsweise erfolgt die Festlegung mittels eines Schweißverfahrens, insbesondere durch Punktschweißung.

Der Obergurt 2 des Profils 1 und des Steges 4 sind im Ausführungsbeispiel ebenso wie der Untergurt 3 und des Steges 4 im rechten Winkel zueinander angeordnet.

Ebenso sind Winkel zwischen dem Obergurt 2 und dem Steg 4 bzw. zwischen dem Untergurt 3 und dem Steg 4 ungleich 90° ausbildbar.

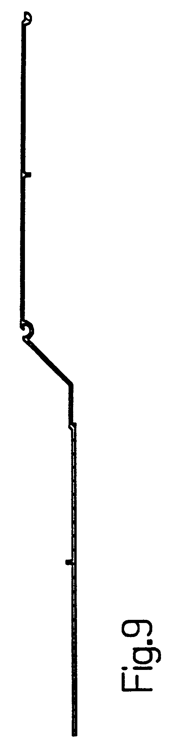

Eine gestreckte Ausbildung eines Profils (mit Winkeln größer als 90°) ist in Fig. 9 dargestellt. Die Ausbildung hat den Vorteil, daß geringere Flächengewichte erzielbar sind bei verminderter Steifigkeit senkrecht zu den Gurten 2, 3.

Die Nutleiste 5 ist rinnenförmig ausgebildet und wird von einem Ansatz 8, der mit Längsstreckung am Obergurt 2 angeformt ist, bereichsweise überdeckt.

Die Federleiste 6 ist von kreissegmentförmigem Querschnitt und in Längserstreckung der Kante des Obergurtes 2 am Obergurt 2 angeformt.

Ein erstes Profil 1 ist mit einem zweiten Profil 1 zu einem Verbundprofil fügbar, indem die Federleiste 6 des ersten Profils 1 in die Nutleiste 5 des zweiten Profils eingehakt wird, wobei das Einhaken unter einem Winkel zwischen den beiden Profilen 1 erfolgt. Nun wird das erste Profil 1 in dem durch die Nut- und Federleiste 6 und 7 gebildeten Gelenk verschwenkt bis das Ende des Untergurtes 3 des zweiten Profils 1 am Absatz 7 des Untergurtes 3 des ersten Profils 1 zur Anlage gelangt. Nunmehr werden die Untergurte 3 gegeneinander durch Verschweißung festgelegt. Die Federleiste 6 des ersten Profils 1 ist in dieser ebenen Lage der Profile 1 zueinander am Ansatz 8 des zweiten Profils zur Anlage gelangt.

Die Nutleiste 5 des zweiten Profils 1 und die Federleiste 6 des ersten Profils 1 können durch Verpressung miteinander form- und kraftschlüssig miteinander verbunden werden. Dadurch entsteht ein höher belastbares Verbundprofil.

Nach dem vorstehend beschriebenen Verfahren sind beliebig viele Profile 1 zu einem Verbundprofil fügbar.

Es ist zweckmäßig, die Profile 1 des Verbundprofils senkrecht und quer zur Hauptkrafteinleitungsrichtung anzuordnen, wenn eine hohe Belastbarkeit bei geringer Nachgiebigkeit des Verbundprofils gefordert ist.

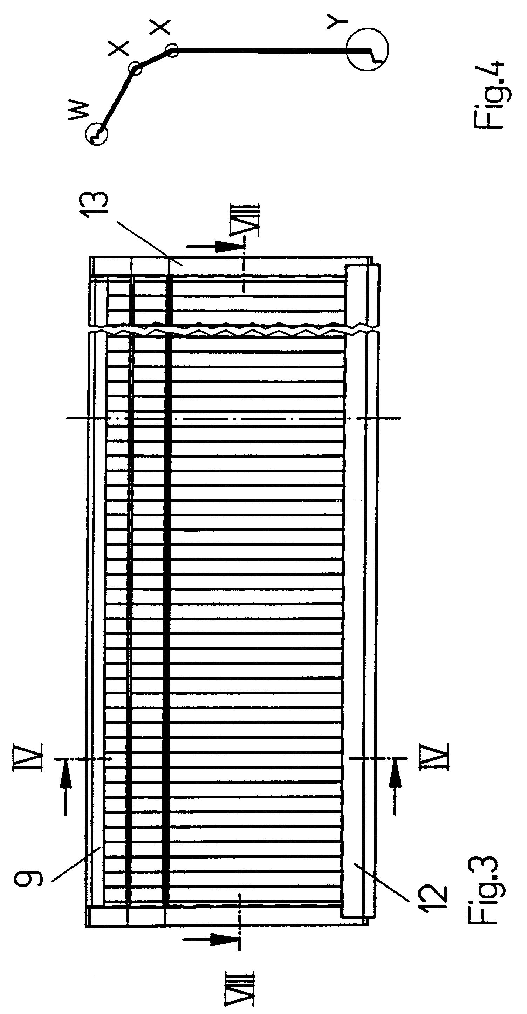

In der Fig. 3 ist eine verschiebbare Seitenwand für gedeckte Eisenbahngüterwagen mit Flächenelementen aus Verbundprofilen dargestellt. In den Figuren 4 bis 8 sind Ansichten und Einzelheiten der Seitenwand gemäß Fig. 3 bzw. Fig. 4 dargestellt.

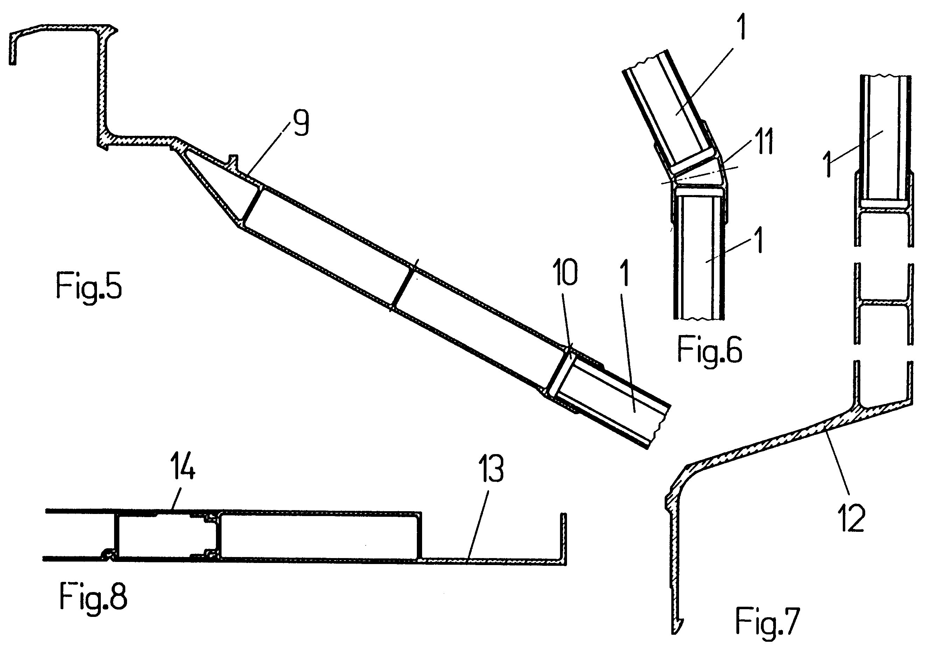

In Fig. 5 ist der obere Bereich der Seitenwand mit einem in Längsrichtung durchlaufenden, die Seitenwand nach oben abschließenden Führungsprofil 9 dargestellt. Das Verbundprofil ist an den Querkanten der Profile 1 in einer u-förmigen Ausnehmung 10 des Führungsprofils 9 eingefaßt.

In Fig. 6 ist ein Bereich der Seitenwand dargestellt, in dem zwei Verbundprofilfelder über ein in Längsrichtung durchlaufenden Doppel-U-Profil 11 miteinander verbunden sind. Wie aus der Fig. 6 entnehmbar, sind auch Winkel zwischen den Verbundprofilfeldern durch entsprechende winkelige Anordnung der Ausnehmungen 10 zueinander einfach herstellbar.

In Fig. 7 ist der untere Bereich der Seitenwand mit einem in Längsrichtung durchlaufenden, die Seitenwand nach unten abschließenden Tragprofil 12 dargestellt. Das Verbundprofil ist an den Querkanten der Profile 1 in einer u-förmigen Ausnehmung 10 des Tragprofils 12 gefaßt.

In Fig. 8 ist ein Abschnitt eines seitlichen Endbereiches der Seitenwand dargestellt. Das die Seitenwand abschließende Vertikalprofil 13 ist an seiner dem Verbundprofilfeld zugewandten Seite mit einem Adapterstück 13 verbunden, in welches das letzte Profil 1 eines Verbundprofilfeldes eingehakt und erfindungsgemäß mit dem Adapter 13 verbunden ist.

Eine Anordnung der Profile 1 eines Verbundprofils senkrecht und parallel zur Hauptkrafteinleitungsebene, d. h. parallel zu den ein Verbundprofilfeld einfassenden Längsprofilen (Führungsprofil 9, Doppel-U-Profil 11, Tragprofil 12) ergibt zwar eine geringere Belastbarkeit des Verbundprofils, ermöglicht jedoch bei Rechteckfeldern die Verwendung von längeren Profilen 1.

Ein wie vorstehend ausgebildetes Verbundprofil ist vorteilhaft als Flächenelement für ein ebenes Wand-, Boden- oder Dachelement für Schienenfahrzeuge einsetzbar.

Durch die Verwendung von Verbundprofilen als Flächenelemente für verschiebbare Seitenwände von gedeckten Eisenbahngüterwagen, wie in den Figuren 3 bis 8 dargestellt, erreicht man im Gegensatz zu bisher bekannten Seitenwandausbildungen bei Eisenbahngüterwagen eine weitgehend glatte Außenfläche.

Dies führt zu günstigen aerodynamischen Eigenschaften mit den Vorteilen eines geringeren Schall- und Geräuschpegels sowie eines geringeren Fahrtwiderstandes.

## Patentansprüche

1. Ebenes, aus Strangpreßprofilen gebildetes, doppelwandiges Verbundprofil, bestehend aus mindestens zwei aus einem Obergurt und einem mit diesem durch Stege auf Abstand verbundenen Untergurt bestehende Strangpreßprofile, bei denen am ersten Profil Nutleisten und am zweiten Profil Federleisten angeformt sind und die beiden Profile mit ihren Nutleisten bzw. Federleisten ineinandergesteckt und in Querrichtung formschlüssig miteinander verbunden sind, **dadurch gekennzeichnet**, daß die ineinandersteckbaren Profile (1) gleich ausgebildet sind, daß der Obergurt (2) jedes Profils (1), an einem Ende des Steges (4) angeordnet, sich zu einer Seite des Steges (4) und der Untergurt (3) jedes Profiles (1), am anderen Ende des Steges (4) angeordnet, sich zur anderen Seite des Steges (4) erstreckt, daß jedes Profil (1) lediglich eine Nutleiste (5) und lediglich eine Federleiste (6) aufweist, daß die Nutleiste (5) etwa in der Längsmittelebene des Profils (1) im Eckbereich zwischen Obergurt (2) und Steg (4) angeordnet ist, daß die Anordnung der Federleiste (6) lediglich am Ende des Obergurtes (2) vorgesehen ist und daß der Untergurt (3) der Profils (1) im Eckbereich zwischen Untergurt (3) und Steg (4) einen stufigen Absatz (7) in Abmessung der Wandstärkendicke des Untergurtes (3) in Richtung auf den Obergurt (2) aufweist, in den das benachbarte Profil (1) mit dem Ende seines Untergurtes (3) bündig eingreift und die Untergurte (3) zweier benachbarter Profile (1) im Eck- oder Absatzbereich gegeneinander festgelegt sind.

2. Ebenes, aus Strangpreßprofilen gebildetes, doppelwandiges Verbundprofil, nach Anspruch 1, **dadurch gekennzeichnet**, daß die Untergurte (3) zweier benachbarter Profile (1) im Eck- oder Absatzbereich zwischen Untergurt (3) und Steg (4) des ersten und am Ende des Untergurtes (3) des benachbarten Profils (1) mittels eines Schweißverfahrens verbunden sind.

3. Ebenes, aus Strangpreßprofilen gebildetes, doppelwandiges Verbundprofil, nach mindestens einem der Ansprüche 1 bis 2, **dadurch gekennzeichnet**, daß die Nutleiste (5) und die Federleiste (6) der Profile (1) durch Verpressung miteinander form- und kraftschlüssig verbunden sind.

4. Ebenes, aus Strangpreßprofilen gebildetes, doppelwandiges Verbundprofil, nach mindestens einem der Ansprüche 1 bis 3, **dadurch gekennzeichnet**, daß der Obergurt (2) jedes Profils (1) sich im rechten Winkel zum Steg (4) zu einer Seite des Steges (4) und der Untergurt (3) jedes Profils (1) sich im rechten Winkel zum Steg (4) zur anderen Seite des Steges (4) erstreckt.

5. Ebenes, aus Strangpreßprofilen gebildetes, doppelwandiges Verbundprofil, nach mindestens einem der Ansprüche 1 bis 4, **dadurch gekennzeichnet**, daß die Profile (1) des Verbundprofils senkrecht und quer zur Hauptkrafteinleitungsebene angeordnet sind.

6. Ebenes, aus Strangpreßprofilen gebildetes, doppelwandiges Verbundprofil, nach mindestens einem der Ansprüche 1 bis 4, **dadurch gekennzeichnet**, daß die Profile (1) des Verbundprofils senkrecht und parallel zur Hauptkrafteinleitungsebene angeordnet sind.

7. Ebenes, aus Strangpreßprofilen gebildetes, doppelwandiges Verbundprofil, nach mindestens einem der Ansprüche 1 bis 6, **dadurch gekennzeichnet**, daß das Verbundprofil ein Flächenelement für Wand-, Boden- oder Dachelemente eines Eisenbahnfahrzeugs ist.

8. Ebenes, aus Strangpreßprofilen gebildetes, doppelwandiges Verbundprofil, nach Anspruch 7, **dadurch gekennzeichnet**, daß das Verbundprofil ein Flächenelement für eine verschiebbare Seitenwand eines gedeckten Eisenbahngüterwagens ist.
